Europäisches Patentamt

European Patent Office

Office européen des brevets

(19)

(11) Publication number: **0 333 370**
**A1**

(12) # EUROPEAN PATENT APPLICATION

(21) Application number: 89302275.6

(51) Int. Cl.⁴: **F16L 11/08**

(22) Date of filing: 07.03.89

(30) Priority: 07.03.88 GB 8805338

(43) Date of publication of application:
20.09.89 Bulletin 89/38

(84) Designated Contracting States:
**BE DE FR NL SE**

(71) Applicant: Wakefield, Anthony Walby
Wakefield House Little Casterton Road
Stamford, Lincs PE9 1BE(GB)

(72) Inventor: Wakefield, Anthony Walby
Wakefield House Little Casterton Road
Stamford Lincs, PE9 1BE(GB)
Inventor: Foster, William Thomas
69, Melrose Way
Chorley Lancs PR7 3HA(GB)

(74) Representative: Day, Jeremy John et al
REDDIE & GROSE 16 Theobalds Road
London, WC1X 8PL(GB)

(54) **Hoses.**

(57) A flexible hose comprises a tubular liner, prefer-
ably of rubber, at least one layer of parallel cord,
preferably polyester tyre cord, wound helically ar-
ound the liner with adjacent turns in close contact, a
first resilient breaker layer, preferably of rubber, a
metal preferably steel, wire reinforcement wound
helically with adjacent turns spaced over the first
breaker layer, a second breaker layer, preferably of
rubber, over the wire reinforcement, at least one
second layer of cord, preferably polyester tyre cord,
wound helically over the second breaker layer in a
direction opposite that in which the first cord layer is
wound and also with adjacent turns in close contact,
and a protective coating, preferably of neoprene or
natural rubber, overlying the second cord layer.
   Preferably the cord layers are each wound at an
angle of 45° to the axis of the hose and the pitch of
the helically wound wire reinforcement is from gto 2
to 4 times the wall thickness of the tubular liner.

# HOSES

This invention relates to hoses and more especially to flexible, steel reinforced, vacuum or pressure hoses.

Conventional vacuum hoses or pressure hoses for working at small bend radius comprise a tubular liner, one or more layers of fabric reinforcement, a strip or wire of steel or other resilient metal helically wound over the fabric reinforcement, one or more further layers of reinforcement material wound over the metal reinforcement and, usually a protective coat forming the external surface of the tube.

Sundry filler and breaker layers may be laid in between the various components to prevent interference between the reinforcing layers, to add bulk, and to prevent the metal helix from biting into the liner or to shape the outside surface of the hose etc.

The layers of reinforcing material may comprise natural or synthetic textile materials and may include fine steel wire. They are laid at a helix angle of about 55° which allows a balance of hoop tension, axial tension and Poisson's ratio effects so the hose does not change materially in length when pressurized.

For use sub-sea, a hose must be both light and extremely flexible or it cannot be handled in the difficult environment of near-weightlessness. To minimise stiffness and weight both the bulk and the quantity of steel have to be minimized and this reduces the pressure ratings for any given hose.

When a conventional hose is bent the cross section distorts slightly into an ellipse. External pressure then induces a bending moment. Thus the external pressure rating of a hose, when bent, is less than when it is straight. In order to counter the induced bending moment a larger amount of helically wound metal must be incorporated than is required to provide a given pressure rating for an unbent hose.

This invention provides an extremely light and flexible hose with very much increased resistance to distortion on bending compared with conventional hoses.

This invention provides a hose comprising a tubular liner, at least one first layer of cord wound helically around the liner with adjacent turns in close contact, a first resilient breaker layer over said first cord layer, a metal wire reinforcement wound helically with adjacent turns spaced over the first breaker layer, a second resilient breaker layer over the wire reinforcement, at least one second layer of cord wound helically over the second breaker layer in a direction opposite that in which the first cord layer is wound and also with adjacent turns in close contact, and a protective coating overlying the second cord layer.

The hose of the invention may also include further filler and/or breaker layers.

The cord layers are preferably each wound at an angle of 45° to the axis of the hose to give maximum external over-pressure resistance but deviations from this winding angle are possible and the cords may, for example, be wound at any angle between 40° and 50°.

The pitch of the wire helix is preferably of the order of three times of the thickness of the wall of the liner but may, for example, range from 2-4 times the wall thickness.

The material of the liner is preferably a smooth natural gum rubber since this provides extremely good abrasion resistance. Other materials that can be used as liner are, for example synthetic rubbers, such as butadiene-acrylonitrile copolymer or other liner materials conventional in the art.

The cord is preferably a polyester tyre cord but other materials, such as for example, polyamide, rayon or cotton, can be used.

If the cords themselves will not bond to each other and to adjacent components of the hose during vulcanisation the cords are precoated and/or impregnated with a material that will achieve this purpose. As an example of a suitable material for this purpose there may be mentioned blended natural-styrene butadiene rubber.

If desired the cords may be laid up as sheets and cut to a desired bias angle for application over the liner material.

To provide increased burst resistance, the guage of the cords of can be increased but preferably two or more layers of cord are used. Where two or more layers of cord are used successive layers are wound in the same direction at a substantially identical helix angle. Where tyre cord is used a single layer will be of the order of 1mm thick with 1.2 cords per mm.

The first cord layer is covered by a layer of resilient breaker material. This breaker layer may, for example, comprise a layer of general purpose commercial grade natural rubber, typically 1.2mm thick. Alternative breaker materials may be necessary to provide compatability with the cord matrix.

The wire reinforcement is preferably a high tensile carbon steel wire which, on winding to form the helix, becomes stressed.

The wire helix is preferably wound in the sense opposite to that of the cord reinforcement which it overlies in order to avoid separation of the cords by the wire as it is formed into a helix. The pitch of the helical winding is preferably of the order of 35mm for a hose diameter of from 100-200 mm which will normally have a wall thickness of about 10 to 15mm and can be reduced for smaller diameters and increased for greater diameters. Typical usable steel quality is 1200-1400 N/mm$^2$ and for hose diameters from 75-200 mm will conveniently be 10 gauge (3.25 mm). Thinner wire can be used for smaller diameter hoses. Because wire thicker than about 10 gauge cannot easily be wound, on hoses designed for higher external over-pressures two or more wire helixes will be used rather than a wire of greater diameter. In such case successive helices are arranged axially of the hose and in tight contact with each other but with the pitch of the helix unchanged.

A second breaker layer of resilient breaker material is then applied over the wire helix, the breaker layer conforming closely to the wire helix and the first breaker layer. The material and thickness of the second breaker layer is preferably identical with that of the first. In order to exclude air and to ensure that the second breaker layer conforms closely to the helix and the first breaker layer it may be advantageous to apply a temporary consolidation bandage.

A first effect of the breaker layers is to reduce the tendency of the wire helix to indent the cord layers. A second effect of the breaker layer is that their resilence allows the cord layers to move relative to the axis of the hose on bending to alter the angle of the helix thus providing improved flexibility.

One or more second cord layers are then applied over the second breaker layer. The cords of this second layer are preferably of a material which is the same as that of the first cord layer. The sense of winding of the second cord layer is opposite to that of the first layer, that is to say it is preferably wound in the same direction as the wire helix. Preferably the number of layers of cord in the first and second cord layers is the same in order to balance the pressure resistant properties of the hose. A temporary consolidation bandage may be advantageously used in this step.

A conventional antistatic bonding wire can conveniently be attached to the metal helix, if desired.

The protective coating material may be any desired material, for example neoprene, for example 1.5mm thick, or natural rubber.

The ends of the hose may be terminated in any desired manner.

After the various layers have been assembled as described, the hose is subjected to vulcanisation, for example by a conventional open steam cure. For vulcanisation the hose is wound helically with a closely woven fibre bandage under tension. The bandage is preferably applied wet to help it to conform to the corrugations in the hose provided by the wire helix and preferably with a 50% overlap. The bandage is then overlaid by a winding between the steel helices of a parallel strip of cords which extend tightly into the angle of the corregations. The bandage and the winding are removed after cure and do not form part of the hose.

The construction of hose according to the present invention provides a hose with a centre-to-face bend radius which is very much less than for any conventional hose having a similar burst strength and diameter and for which the force required to bend the hose to a given radius is very much lower than that required for any conventional hose having a similar burst strength and diameter. Moreover, the amount by which the external pressure may exceed the internal pressure is very much greater than for any conventional hose of similar mass.

The improvements in the bend radius and resistance to external over pressure arise primarily because with the construction according to the present invention the hose retains its circular cross section for a considerably smaller bend radius so that the quantity of metal of the helical reinforcement can be considerably reduced which means that the pitch of the wire helix can be increased and the unit weight of the hose reduced. Since the limit of bend radius is primarily determined by the point where adjacent turns of the wire helix approach one another on bending, to the limit of the rubber surrounding them, increasing the pitch of the helix provides a decrease in bend radius.

The great improvement in flexibility of the hose arises primarily on the one hand because parallel helically wound cords are used instead of a textile fabric reinforcement, the presence of crossing threads in a textile fabric considerably increasing the resistance to bending, and on the other hand because the wire helix is of greater pitch which allows wider and deeper corrugations.

The hose of the invention can be used for the same purpose as any of the conventional hoses hitherto proposed but because of its lightness and flexibility for a given pressure rating has considerable advantages for use in many operations.

For use in under-water operations where the external pressure, of course, depends on depth, the improved external pressure rating of the hose of the invention allows a far lighter hose construction to be used at much greater depth than a conventional hose.

The extreme flexibility of the hose makes it extremely useful for vacuum cleaning operations, especially in difficultly accessible locations which may, for example, involve taking the hose up ladders or along catwalks.

For discharge operations, the rate of discharge through a hose is limited by the hose diameter which is itself limited by the ability of an operator to handle the hose. Because the hose of the invention is lighter and more flexible than a conventional hose of similar diameter and is hence more easy to handle, a hose according to the invention of far larger diameter than a conventional hose can be used in such operations. Thus for example using a hose according to the invention a road tanker can be discharged at a far greater rate than is previously been possible allowing a considerable reduction in turn round time.

## Claims

1. A hose comprising a tubular liner, at least one layer of parallel cord wound helically around the liner with adjacent turns in close contact, a first resilient breaker layer, a metal wire reinforcement wound helically with adjacent turns spaced over the first breaker layer, a second resilient breaker layer over the wire reinforcement, at least one second layer of cord wound helically over the second breaker layer in a direction opposite that in which the first cord layer is wound and also with adjacent turns in close contact, and a protective coating overlying the second cord layer.

2. A hose according to claim 1 wherein the cord layers and the wire reinforcement are each wound at an angle of from $40°$ to $50°$ to the axis of the hose.

3. A hose according to claim 2 wherein the cord layers are each wound at an angle of $45°$ to the axis of the hose.

4. A hose according to any one of claims 1 to 3 wherein the cord is a polyamide, rayon, cotton or polyester cord.

5. A hose according to any one of claims 1 to 4 wherein the cords are formed from or coated or impregnated with, a material that will bind the cords to each other and to adjacent components of the hose during vulcanisation.

6. A hose according to any one of claims 1 to 5 wherein the pitch of the helically wound wire reinforcement is within the range of from 2 to 4 time the wall thickness of the tubular liner.

7. A hose according to claim 6 wherein the pitch of the wire reinforcement is substantially three times the wall thickness of the tubular liner.

8. A hose according to any one of claims 1 to 7 wherein the wire reinforcement is a high tensile carbon steel wire.

9. A hose according to any one of claims 1 to 8 wherein the wire reinforcement is wound in a direction opposite to that of the cord layer which it overlies

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 157 542 (THE B.F. GOODRICH CO.) * Page 3, lines 36-91; figures 1,5 * | 1,4,8,9 | F 16 L 11/08 |
| A | DE-A-1 650 142 (PHOENIX GUMMIWERKE AG) * Page 2, last paragraph - page 3, paragraph 1; figure 5 * | 1,2,4,8 | |
| A | FR-A-2 177 996 (UNIROYAL INC.) * Page 6, line 26 - page 7, line 21; figures 2,3; claim 4 * | 1-4,9 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 15-06-1989 | BARTSCH A.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)